(19) Europäisches Patentamt
European Patent Office
Office européen des brevets

(11) EP 2 551 794 A2

(12) EUROPEAN PATENT APPLICATION

(43) Date of publication:
30.01.2013 Bulletin 2013/05

(51) Int Cl.:
*G06K 9/00* (2006.01)

(21) Application number: 12178144.7

(22) Date of filing: 27.07.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 28.07.2011 JP 2011165343

(71) Applicant: Hitachi Ltd.
Tokyo 100-8280 (JP)

(72) Inventors:
• Takemura, Masayuki
Tokyo, 100-8220 (JP)
• Muramatsu, Shoji
Saitama, 330-0081 (JP)
• Shima, Takeshi
Tokyo, 100-8220 (JP)
• Sakata, Masao
Saitama, 330-0081 (JP)

(74) Representative: MERH-IP
Matias Erny Reichl Hoffmann
Paul-Heyse-Strasse 29
80336 München (DE)

(54) **Onboard environment recognition system**

(57) To provide an onboard environment recognition system capable of preventing, with a reduced processing load, erroneous recognition caused by light from a headlight of a vehicle in the surroundings. An onboard environment recognition system 100 has a light source extraction unit 300 that extracts a light source from an image, a light information unit 400 that extracts light whose light source causes erroneous detection in environment recognition based on the position of the light source in the image and estimates light information including information on the light intensity, the three-dimensional position and the light distribution pattern of the light, a road surface reflection estimation unit 500 that estimates, based on the light information, a road surface reflection estimation image region in the image in which the light is reflected on a road surface, and an onboard environment recognition unit 600 that recognizes the environment surrounding the vehicle based on the road surface reflection estimation image region.

FIG. 1

EP 2 551 794 A2

**Description**

BACKGROUND OF THE INVENTION

Field of the Invention

The present invention relates to an onboard environment recognition system that recognizes the environment surrounding a vehicle based on an image taken by an onboard camera.

Background Art

In recent years, cameras have been developed that recognize the environment surrounding a vehicle, such as an automobile. The camera-based recognition technique tends to suffer from poor recognition in the nighttime when the visibility is low. In particular, a video taken by a rear camera tends to be darker and have less visibility because the road surface imaged by the rear camera cannot be illuminated by the head lamp of the vehicle, and the dark video needs an image processing. In addition, if there is a following vehicle, the video taken by the rear camera tends to lead to erroneous recognition because of a whiteout caused by the headlight of the following vehicle being extremely bright compared with the dark surrounding area.

JP Patent Publication (Kokai) No. 11-203446A (1999) discloses a technique of determining whether or not there is a mirror reflection light on a road surface based on the difference in intensity of the mirror reflection component between two cameras with different points of view and removing the mirror reflection light if there is any mirror reflection light. JP Patent Publication (Kokai) No. 2009-65360A discloses a technique of detecting a set of a vehicle light, which is a real image, and a road surface reflection, which is a virtual image, and generating a corrected image with the road surface reflection, which is a virtual image, suppressed.

SUMMARY OF THE INVENTION

For an onboard camera that recognizes the environment surrounding a vehicle, not only a mirror reflection region having a high luminance on a road surface but also a region whose luminance is low but relatively high compared with the surroundings causes erroneous detection. In particular, a rear camera, which shoots a video of a region not illuminated by the headlight of the vehicle in the nighttime, is required to detect a lane line or a vehicle in the low contrast video, so that a reflection region whose luminance is low but higher than that of the surrounding road surface causes erroneous detection.

Conventional techniques, such as those described above, can extract a reflection region having a high luminance but can hardly detect a reflection region having a low luminance in an image.

According to JP Patent Publication (Kokai) No. 11-203446A (1999), a stereo camera is used to extract a mirror reflection component having a high luminance from two images with different points of view. However, it is difficult for a monocular camera to shoot two images with different points of view at the same time. According to JP Patent Publication (Kokai) No. 2009-65360A, a mirror reflection having a high luminance is recognized based on a set of a real image and a virtual image. However, to a camera that combines a viewing function and a recognition function, a headlight and a road surface reflection thereof appear to be merged. In addition, an image recognition application is more susceptible to erroneous detection caused by a reflection region having a low luminance than that caused by a reflection region having a high luminance. Thus, direct application of the principle disclosed in JP Patent Publication (Kokai) No. 2009-65360A can hardly solve the problem of erroneous detection. Furthermore, the techniques disclosed in JP Patent Publication (Kokai) No. 11-203446A (1999) and JP Patent Publication (Kokai) No. 2009-65360A have a problem that, since the mirror reflection is recognized by image processing, the processing load is relatively high compared with the embodiments in which the image processing is applied only to simple extraction of a region having a high luminance, and the remaining road surface reflection regions are estimated by calculation.

The present invention has been devised in view of the circumstances described above, and an object of the present invention is to provide an onboard environment recognition system capable of preventing, with a reduced processing load, erroneous recognition caused by light from a headlight of a vehicle in the surroundings.

To attain the object described above, an onboard environment recognition system according to the present invention is characterized by estimating, based on the position of a light source in an image, a road surface reflection estimation image region in the image in which light that causes erroneous detection in environment recognition is reflected on a road surface, and recognizing the environment surrounding the vehicle based on the road surface reflection estimation image region.

According to the present invention, the road surface reflection estimation image region in which light that causes erroneous detection is reflected can be excluded from the processing region for recognizing the environment surrounding the vehicle, so that the environment surrounding the vehicle can be accurately recognized.

BRIEF DESCRIPTION OF THE DRAWINGS

FIG. 1 is a diagram showing a configuration of an onboard environment recognition system.
FIG. 2 is a diagram showing an internal configuration of a light source extraction unit.
FIG. 3 is a diagram showing an internal configuration of a light information unit.
FIG. 4 is a diagram showing an internal configuration of a road surface reflection estimation unit.
FIG. 5 is a diagram showing an internal configuration of an onboard environment recognition unit.
FIG. 6 is a diagram showing an internal configuration of a lane recognition unit taking measures against road surface reflection.
FIG. 7 is a diagram showing an internal configuration of a carriageway recognition unit taking measures against road surface reflection.
FIG. 8 is a diagram showing an internal configuration of a road surface sign recognition unit taking measures against road surface reflection.
FIG. 9 includes diagrams for illustrating a method of estimating the three-dimensional position of a light.
FIG. 10 includes diagrams showing a light distribution pattern in terms of illuminance.
FIG. 11 includes diagrams for illustrating a diffuse reflection and a mirror reflection.
FIG. 12 includes diagrams for illustrating a method of estimating a diffuse reflection region.
FIG. 13 includes diagrams for illustrating a method of estimating a mirror reflection region.
FIG. 14 is a diagram showing switching of measures against reflection between day and night.
FIG. 15 is a diagram showing a configuration of an evening sun-caused road surface reflection information unit.
FIG. 16 is a diagram showing a configuration of an evening sun-caused road surface reflection estimation unit.
FIG. 17 includes diagrams for illustrating a method of estimating an evening sun-caused road surface reflection region.
FIG. 18 is a diagram showing an internal configuration of a vehicle detection unit.

DETAILED DESCRIPTION OF THE PREFERRED EMBODIMENTS

In the following, embodiments will be described with reference to the drawings.

[Embodiment 1]

An onboard environment recognition system according to an embodiment 1 is integrated into an onboard camera on an automobile that displays, to the driver, an image of surroundings of the vehicle taken by a rear camera or a side camera for parking assistance.

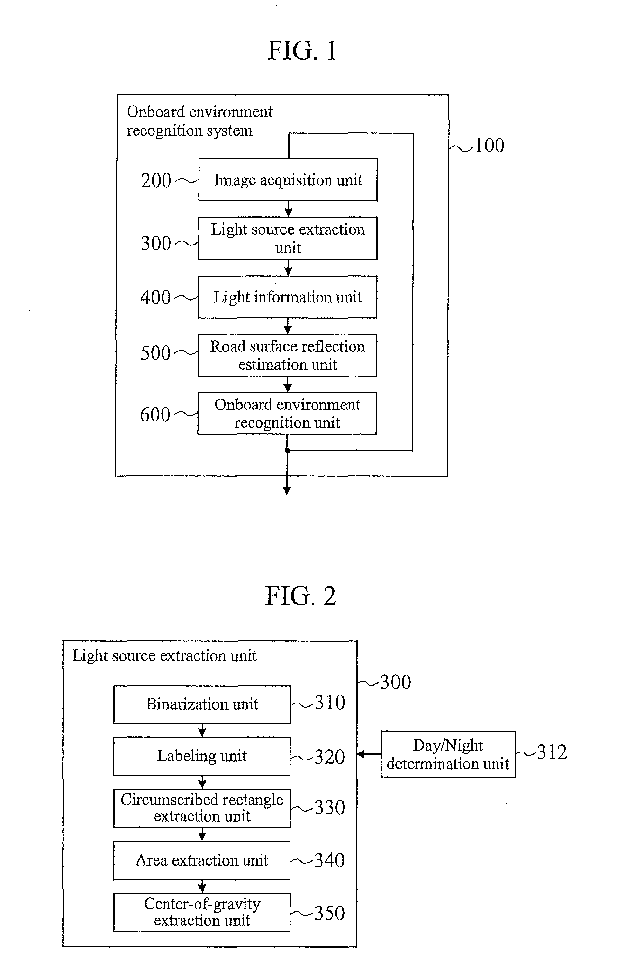

FIG. 1 is a diagram showing a configuration of the onboard environment recognition system according to this embodiment.
As shown in FIG. 1, an onboard environment recognition system 100 has an image acquisition unit 200, a light source extraction unit 300, a light information unit 400, a road surface reflection estimation unit 500 and an onboard environment recognition unit 600 as internal features of an ECU of an onboard camera.
The image acquisition unit 200 acquires an image of surroundings of the vehicle taken by a monocular camera, and the light source extraction unit 300 extracts a light source from the image acquired by the image acquisition unit 200. The light information unit 400 determines whether or not the light source extracted by the light source extraction unit 300 is a light that causes erroneous detection in environment recognition and, if the result of the determination is positive, predicts the three-dimensional position of the light and estimates the illumination range, the light distribution pattern or the like.
The road surface reflection estimation unit 500 estimates a mirror reflection, a diffuse reflection or the like that occurs on the road surface from the three-dimensional position, the illumination range, the light distribution pattern or the like of the light predicted or otherwise determined by the light information unit 400, and estimates a road surface reflection estimation image region. The onboard environment recognition unit 600 recognizes the environment surrounding the vehicle, including a lane line, based on such road reflection information.
FIG. 2 is a diagram showing an internal configuration of the light source extraction unit shown in FIG. 1.
The light source extraction unit 300 is designed to extract a point light source having an area equal to or larger than a preset threshold from the image as a light source and, as shown in FIG. 2, has a binarization unit 310 that extracts a light spot having a luminance value equal to or higher than a preset value from a taken image, a labeling unit 320 that labels the result of the binarization and deletes a labeling result having a small area that is considered as being caused by noise, a circumscribed rectangle extraction unit 330 that extracts a circumscribed rectangle of the labeling result, an area extraction unit 340 that calculates the area of the labeling result, and a center-of-gravity extraction unit 350 that extracts the center of gravity of the labeling result.

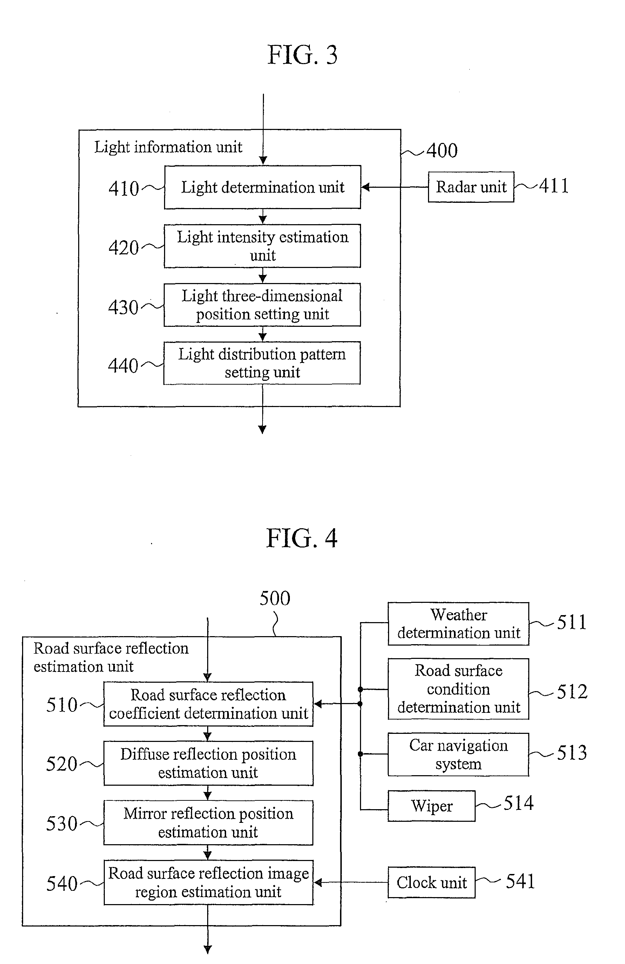

FIG. 3 is a diagram showing an internal configuration of the light information unit shown in FIG. 1.

The light information unit 400 extracts light whose light source causes erroneous detection in environment recognition based on the position in the image of the light source extracted by the light source extraction unit 300 and estimates light information including information on the intensity, the three-dimensional position and the light distribution pattern of the light.

As shown in FIG. 3, the light information unit 400 has a light determination unit 410 that determines whether or not the light source extracted by the light source extraction unit 300 is a light that can cause erroneous detection by the onboard environment recognition system 100, a light intensity estimation unit 420 that estimates the intensity of the light from the area of the light source extracted by the light source extraction unit 300 or the like, a light three-dimensional position setting unit 430 that estimates the three-dimensional position of the light source extracted by the light source extraction unit 300, and a light distribution pattern setting unit 440 that sets the light distribution pattern, including the illumination range, of the light source determined to be the light. The light determination unit 410 may make the determination based on a result from a radar unit 411 or a day/night determination unit 312.

FIG. 4 is a diagram showing a configuration of the road surface reflection estimation unit shown in FIG. 1.

As shown in FIG. 4, the road surface reflection estimation unit 500 has a road surface reflection coefficient determination unit 510 that determines a reflection coefficient of the road surface, a diffuse reflection position estimation unit 520 that estimates the position of a diffuse reflection produced on the road surface by the light source extracted by the light information unit 400, a mirror reflection position estimation unit 530 that estimates the position of a mirror reflection produced on the road surface by the light source extracted from the light information unit, and a road reflection image region estimation unit 540 that estimates a road surface reflection estimation image region in the image that causes erroneous detection from the three-dimensional positions of the road surface reflections estimated by the diffuse reflection position estimation unit 520 and the mirror reflection position estimation unit 530.

The road surface reflection coefficient determination unit 510 determines the road surface reflection coefficient based on a result from a weather determination unit 511 that determines weather, such rainy, cloudy or clear. If the road surface is wet in rainy weather, for example, a mirror reflection of the head lamp is likely to occur on the road surface, so that the whiteout region caused by the mirror reflection is larger than in the normal condition, and therefore, an estimated mirror reflection region that can cause erroneous detection is also larger. On the other hand, if the road surface is dry in clear weather, for example, the mirror reflection is unlikely to occur, whereas the diffuse reflection is likely to occur. By determining the road surface reflection coefficients of the mirror reflection and the diffuse reflection based on the road surface condition in this way, a reflection region, which is to be excluded from a lane recognition processing target region, is estimated.

As an alternative to determining based on weather, the road reflection coefficient determination unit 510 may determine the road reflection coefficient and change the size of the range of the influence of the light source on the image region based on a result from a road condition determination unit 512 that directly determines the road surface condition, such as wet, dry or covered with snow.

The road surface reflection coefficient determination unit 510 may determine the road surface reflection coefficient from road environment information derived from map information from a car navigation system 513, the direction of traveling or the like, and the road surface reflection image region estimation unit 540 may change the size of the possible range of the influence of the light source as a cause of erroneous detection on the image, such as production of a whiteout region, based on the relative position to the sun, the direction of traveling or the like obtained from the car navigation system 513.

The road surface reflection coefficient determination unit 510 may determine the road surface reflection coefficient by determining weather based on the operational state of a wiper 514. The road surface reflection image region estimation unit 540 may adjust the size of the range of the influence of the road reflection on the image region by predicting the position of the sun based on the time measured by a clock unit 541 and thereby determining whether it is day or night.

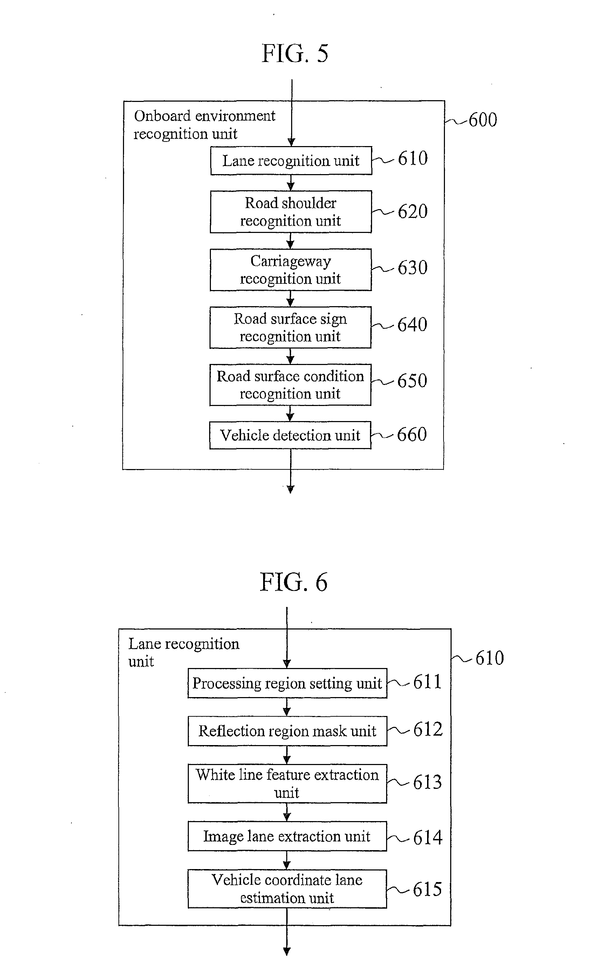

FIG. 5 is a diagram showing an internal configuration of the onboard environment recognition unit 600 shown in FIG. 1.

As shown in FIG. 5, the onboard environment recognition unit 600 takes measures to prevent erroneous detection by each recognition application based on the road surface reflection estimation image region in the image estimated by the road reflection estimation unit 500. The recognition applications include a lane recognition unit 610 that recognizes a lane mark, which is used to issue a lane deviation alert or prevent a lane deviation, a road shoulder recognition unit 620 that recognizes a road shoulder, which is used to issue a traveling region deviation alert to the vehicle or prevent a traveling region deviation, a carriageway recognition unit 630 that determines whether or not an area where there is no lane line, such as a construction site, is an area where the vehicle can travel through, a road surface sign recognition unit 640 that recognizes a road surface sign of a speed limit on the road surface, a road surface condition recognition unit 650 that determines whether the road surface is dry, wet or covered with snow, for example, and a vehicle detection unit 660 that detects a vehicle, which is used to assist a lane change. Note that the onboard environment recognition unit 600 does not always have to have all the recognition applications (recognition units 610 to 650) described above but may include at least any one of them or may include other recognition units.

Next, a configuration of each unit will be described in more detail.

<Light Source Extraction Unit 300>

The light source extraction unit 300 is not intended to detect the light of another vehicle for control of the headlight, for example, but to detect a light source that can cause erroneous detection in environment recognition. Since a point light source having a small size or a low luminance is unlikely to cause a road surface reflection or the like, such a light source is excluded from the target of extraction by the light source extraction unit 300. This advantageously helps to reduce the processing load and to avoid excessive measures against erroneous detection.

In addition, for example, the headlight of a vehicle traveling one lane away, which is outside of the target region of the recognition application of the onboard environment recognition unit 600, can be excluded from the target of the image processing for searching for a light source, even if it is reflected on the road surface. In addition, a light source located above the vanishing point in the image can be regarded as a light source located at a position higher than the camera, such as a road light or a signal, and therefore can be excluded from the target of the processing.

The processing target region can be changed depending on weather. For example, the mirror reflection is likely to occur on a wet road in or after rain, and the mirror reflection of light from a road light or a signal, which is unlikely to occur on a normal dry road, tends to inhibit the vehicle from recognizing the surrounding environment (cause erroneous detection). To avoid this, the target region for light source extraction is determined depending on weather or the road condition.

The method shown in FIG. 2 is just an example and does not always require all the shown internal processings, and any other method that can determine the position of the light source in the image can be used. The onboard environment recognition system 100 according to this embodiment is primarily designed to prevent erroneous detection of the light of a following vehicle in the nighttime, so that the light source extraction processing by the light source extraction unit 300, the light determination processing by the light information unit 400, the road surface reflection estimation processing by the road surface reflection estimation unit 500 or the like can be omitted in a bright environment, such as in the daytime, in an illuminated indoor parking space and in an illuminated tunnel.

Thus, the light source extraction unit 300, the light information unit 400 or the road surface reflection estimation unit 500 can be stopped operating based on the GPS position from the navigation system, the time (time of day) or the map information including tunnels, for example. As the information based on which the operation of these units is switched on and off, headlight on/off signals and/or a signal from an illuminance sensor or the like used to automatically control turning on and off of the headlight can also be used.

Alternatively, the day/night determination unit 312 can determine whether it is day or night based on the shutter speed or the gain of the camera or the image taken by the camera, and the light source extraction unit 300, the light information unit 400 or the road surface reflection unit 500 can be stopped operating based on the determination result. These units can also be stopped based on information obtained by road/vehicle communication, vehicle/vehicle communication or the like. Alternatively, it can be determined to halt the processing of the light information unit 400 or the road surface reflection estimation unit 500 based on the result from the light source extraction unit 300. Alternatively, the day/night determination can be made based on the results from the light source extraction unit 300 and the light information unit 400, and the operation of the road surface reflection estimation unit 500 can be stopped based on the result of the day/night determination. Alternatively, the day/night determination can be omitted, and the operation of the road surface reflection estimation unit 500, the light source extraction unit 300 or the light information unit 400 can be stopped based on the surrounding light environment.

<Light Information Unit 400>

The light determination unit 410 performs a processing to determine whether or not the light source extracted in the image is a light that is estimated to cause a road surface reflection. Known conventional techniques, for example, have suffered from high processing loads because they involve a processing to recognize the road surface reflection itself and have hardly been able to detect the light of a following vehicle, which appears to be merged with the road surface reflection, with one camera. Even if the mirror reflection region having a high luminance of the road surface reflection can be determined, it has been difficult to recognize in which direction, and how far in that direction, the reflection region having a low luminance or the diffuse reflection region around the region having a high luminance (the mirror reflection region) extends.

This method successfully prevents erroneous detection by applying the Phong reflection model, which is used for CG shading, to estimate not only the road surface reflection region but also the reflection region having a low luminance, thereby setting the reflection region having a low luminance outside of the target region of the image recognition processing.

According to the Phong reflection model, reflections on body surfaces are classified into three reflection components, a mirror reflection, a diffuse reflection and an environment reflection, and shading of the object is achieved based on the three reflection components. From among the reflection components of a reflection of light from a headlight in the nighttime, reflection components that cause erroneous detection by the onboard environment recognition unit are chosen. As can be seen from analysis of a video taken by the onboard camera, the environment reflection is a secondary reflection of light from another object, for example, which provides a uniform color to an object and therefore is not a cause of erroneous detection for the onboard environment recognition unit. Next, the diffuse reflection is a cause of erroneous detection because the luminance on the road surface is high in the region illuminated by the directive headlight and decreases as the distance from the headlight increases or the angle of deviation from the beam of the headlight increases, so that the difference in luminance between the region illuminated by the headlight and the surrounding regions is significant. Finally, the mirror reflection is also a cause of erroneous detection because the reflection region formed by mirror reflection light from the road surface along the straight line connecting the headlight or light source and the camera on the vehicle is brighter than the surrounding regions of the road surface.

Thus, as measures against erroneous detection caused by the headlight in the nighttime, the reflection region that is likely to cause erroneous detection in image recognition is estimated by using the mirror reflection and the diffuse reflection, which provide a road surface region having a higher luminance than that of the surrounding road surface region. According to known conventional techniques, only the mirror reflection is taken into consideration, or it is difficult to extract a reflection region whose luminance is low but higher than that of the surroundings only by image processing, although a region having a high luminance can be easily extracted by image processing. According to this embodiment, image processing is applied only to extraction of a region having a high luminance, which is relatively easily extracted by image processing, and a reflection region that causes erroneous detection in image recognition is estimated from the extracted light source, thereby substantially reducing the number of images to be searched. Since the reflection region is estimated by calculation, the processing load can be substantially reduced, and the reflection region whose luminance is low but relatively higher than that of the surrounding environment, which has hardly been extracted according to the conventional techniques, can be extracted.

In addition, limiting the light source extracted to the headlight of another vehicle traveling on the same road as the vehicle allows the reflection region formed by diffuse reflection, which cannot be handled by the conventional techniques, to be estimated as a reflection region that causes erroneous detection in image recognition. Thus, the reflection region formed by diffuse reflection and the mirror reflection region or diffuse reflection region whose luminance is low but higher than that of the surrounding environment, which have hardly been handled by the conventional techniques, can be estimated. As a result, each image recognition application can be more suitably adapted, and the range of application of each image recognition application can be widened.

To determine a region that can cause erroneous detection of a headlight, the diffuse reflection component and the mirror reflection component of the reflection components of the Phong reflection model are used to calculate the luminance I at a point of interest in a region on a road surface. The luminance I at the point of interest can be expressed as a sum of a diffuse reflection component:

$Kd(L \bullet N)i_d$ and
a mirror reflection component:
$Ks(R \bullet V)^{\alpha} i_s$.

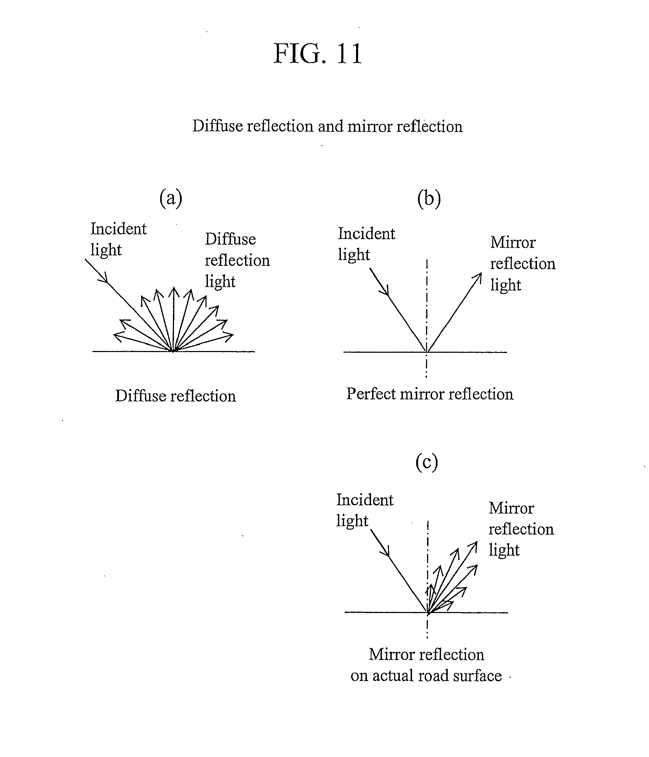

Referring to FIG. 11(a), the diffuse reflection component is expressed by a diffuse reflection coefficient Kd of incident light that indicates which light is not absorbed but reflected by the road surface, a beam direction vector L from the position of the extracted light source, a normal vector N that extends vertically upward on the assumption that any object is a horizontal road surface, and a light intensity id of the diffuse light of the light from the light source that causes erroneous detection. The diffuse reflectance actually varies with the wavelength, that is, the color, of the incident light. However, in the case described here, it is assumed that the diffuse reflectance does not vary with the wavelength of the incident light, because the road surface and the light have colors of a low chroma.

Provided that the degree of convergence of the actual mirror reflection light is denoted by $\alpha$, the actual mirror reflection shown in FIG. 11(c) comes closer to the perfect mirror reflection shown in FIG. 11(b) as $\alpha$ increases as shown in FIG. 11(c). The mirror reflection component is estimated based on an assumption that the intensity of the reflection light varies depending on a mirror reflection coefficient Ks that indicates the degree of mirror reflection on the road surface, an intensity is of the mirror reflection light of the headlight that causes erroneous detection, a camera direction vector V and a beam direction vector R.

The road surface luminance is estimated from the diffuse reflection component and the mirror reflection component, thereby estimating a region that can cause erroneous detection of a reflection.

I: luminance at the point of interest
Kd: diffuse reflection coefficient
L: direction vector to the light source
N: normal vector to the object
$i_d$: intensity of the diffuse light
Ks: mirror reflection coefficient
R: direction vector of perfect reflection of the light
V: direction vector to the camera
$\alpha$ : degree of convergence of the mirror reflection
$i_s$: intensity of the mirror reflection light

$$I = Kd(L \bullet N)i_d + Ks(R \bullet V)^{\alpha} i_s$$

In this way, a light source that leads to reflection is extracted, and the reflection region is not recognized but estimated. Thus, even a reflection region having a low luminance can be estimated, so that the number of erroneous detections can be reduced.

Although the diffuse reflection component and the mirror reflection component that are involved in the Phong reflection model can be expressed by the formulas described above, they cannot be directly calculated in the environment of the image recognition by the onboard camera, since not all the factors are known unlike the CG environment. Now, there will be described how the formulas described above are applied as basic concepts to the calculation to estimate the reflection region using the information obtained from the image.

First, the three-dimensional position of the light source will be described. To determine the three-dimensional position, positional relationships among the camera, the road surface and the light source are required. The reflection region is not calculated for all the possible light sources but calculated for the light of another vehicle. To this end, it is determined whether or not the extracted light source is a light estimated to lead to a road surface reflection based on the position of the light source in the image. The light determination unit 410 determines whether or not the light estimated to lead to a road surface reflection is the headlight of another vehicle, for example.

The light three-dimensional position setting unit 430 may perform calculation in advance, and the result of the calculation may be used for the determination of whether or not the light source extracted in the image is a light that leads to a road surface reflection. Alternatively, information on the shape, the pattern or the color of the light source may be analyzed in advance, and the result of the analysis may be used for the determination of whether or not the light source extracted in the image is a light that leads to a road surface reflection. Alternatively, tracking may be performed on the image, and the motion of the light source may be analyzed to determine whether the light source is a stationary object on the road surface or the headlight of another vehicle and thereby determine whether to take measures against road surface reflection to prevent erroneous detection. Alternatively, whether the light source is the headlight of another vehicle or not may be determined by comparison with a vehicle detection result or a three-dimensional object recognition result from the radar unit 411. As an alternative to the result from the radar unit 411, a three-dimensional object recognition result from a stereo camera, a result of vehicle/vehicle communication, or a result of a road/vehicle communication may be used.

In this way, the relative three-dimensional positions of the camera on the vehicle and the light source are known. In addition, it is assumed that the reflection occurs on the horizontal road surface. Thus, there is enough information to calculate the intensity of the reflection light at one point on the road surface in the image.

As for the diffuse reflection, the direction vector to the light source can be calculated, because the three-dimensional positions of the light source and the point on the road surface are known from estimation of the three-dimensional position of the point on the road surface in the image. In addition, the normal vector of any object extends vertically upward because of the assumption that the road surface is horizontal. Taking these into consideration, the luminance of the point on the road surface in the image can be calculated if the diffuse reflection coefficient of the road surface and the intensity of the diffuse light of the headlight are known.

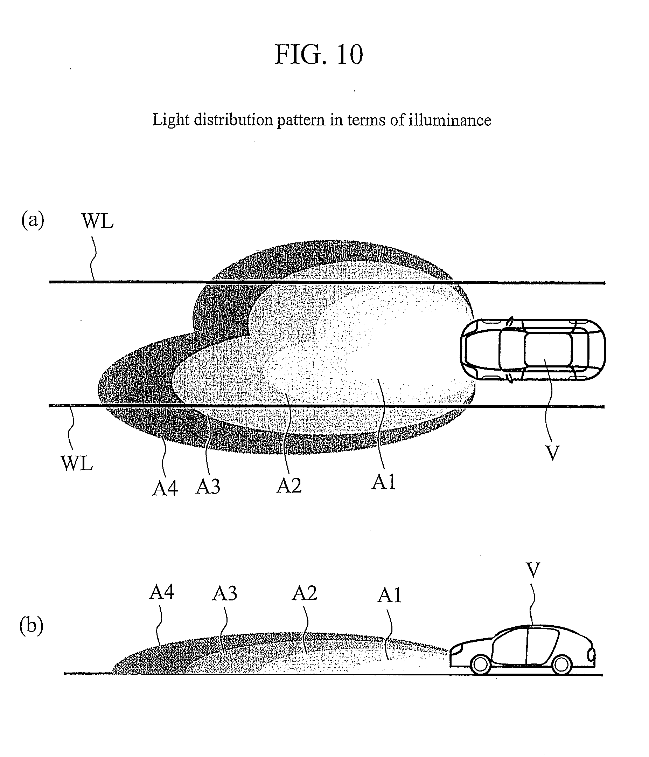

If it is assumed that any road surface is horizontal, and the direction vector from the light source is taken into consideration, the luminance can be determined in proportion to the product of the intensity of the diffuse light and the diffuse reflection coefficient. That is, if the luminance on the road surface is previously calculated and shown by contour lines with respect to the headlight of the vehicle as shown in FIG. 10, the contour lines vary in proportion to the product of the intensity of the diffuse light and the diffuse reflection coefficient. That is, in real time calculation, only the diffuse reflection coefficient and the intensity of the diffuse light have to be calculated, and the remaining calculations can be performed in advance at the time of initialization.

However, the diffuse reflection light components calculated as described above do not have the light distribution pattern of the actual headlight shown in FIG. 10. This is because the light defined in the Phong reflection model is essentially a point light source, so that if the Phong reflection model is simply applied, circular contour lines are formed that indicate that the brightest region of the road surface is the region immediately below the point light source, and the brightness decreases as the distance from the region increases. To calculate the road surface reflection component of the diffuse light of the highly directive headlight, the calculation result can be corrected so that the intensity of the diffuse light attenuates as the deviation angle increases based on the inner product of the vector in the direction in which the light of the headlight is brightest and the direction vector to the light source. In this embodiment, on the assumption that it is difficult to recognize the variations among the headlights of individual vehicles, the light distribution pattern such as that shown in FIG. 10 is calculated based on a directivity previously defined.

In the case where the diffuse reflection is likely to occur because of the road surface condition, for example, the range of targets to be detected as a cause of erroneous detection can be expanded, and the light sources handled by the light information unit 400 can include light sources, such as road lights, other than the headlights of other vehicles. The light distribution pattern of a light source having no directivity may be prepared so that the light distribution pattern of the diffuse reflection of the road light can be used to prevent erroneous detection.

The light determination unit 410 excludes the light source that does not leads to a road surface reflection from the targets to be detected as a cause of erroneous detection and can accordingly reduce the unnecessary processing loads on the light intensity estimation unit 420, the light three-dimensional position setting unit 430 and the light distribution pattern setting unit 440 and the unnecessary processing load on each of the subsequent applications, such as the lane recognition application.

The light intensity estimation unit 420 estimates the light intensity of the light determined by the light determination unit 410 to lead to a road surface reflection. In the case where the light source may not only be the light of another vehicle but also be another light, source such as a road light, the light intensity of the light source is estimated. The light intensity estimation unit 420 estimates the light intensity based on the area of the whiteout region in the image. According to this embodiment, the diffuse light intensity and the mirror reflection light intensity are estimated based on the area of the whiteout region in the image.

If the actual camera setting information, such as shutter speed or gain, is available or can be analyzed, the value can also be used to estimate the light intensity. However, the accurate position or posture of the following vehicle, such as the height of the light from the ground and the inclination of the road, are largely unknown. However, depending on the required final precision of the estimation of the reflection region, it is sufficiently practically useful to perform the simple calculation involving no such precise analysis based on the correlation between the area of the light source in the image and the degree of the reflection. However, this holds true because the subsequent applications are the lane recognition application, the road shoulder detection application, the carriageway recognition application and the like that can achieve recognition based on the remaining region even if a region is excluded from the target of the application.

As for pedestrian detection or vehicle detection, if a region is excluded from the target of the application, it means that any vehicle in the region cannot be detected, so that the system decides that vehicle detection is impossible and gives up operating. Thus, in the pedestrian detection or vehicle detection to prevent or avoid collision, the region is not excluded from the recognition processing target regions but regarded as a highly luminous region where a reflection has occurred, and the parameters for the region are changed, or a different recognition processing is applied to the region.

Among other applications, the lane detection and the road shoulder recognition tend to recognize a linear object having a high luminance in the image as a cause of erroneous detection. Conventional extraction methods based on image processing can easily determine a region having a high luminance as a road surface reflection but can hardly discriminate between the region having a luminance that is relatively low in the reflection of the headlight but is still higher than that of the surrounding region of the road surface and the surrounding region. According to this embodiment, the reflection region of the road surface can be estimated with a simple model by grasping the characteristics of the reflection caused by the headlight of the following vehicle.

However, even in the case where the actual camera setting information is not available, the degree of the influence of the road surface reflection on the camera can be estimated from the area of the whiteout region. If the whiteout region is extremely elongated, it can be determined that the whiteout region is formed by the road surface reflection and the light are merged with each other.

If the light source appears to be a point light source having a high luminance but extremely small area in the image, the light source is often the headlight of a vehicle in the distance, and the probability is extremely low that the road surface reflection of the light actually leads to erroneous detection.

Thus, to determine whether or not a light source that is actually the headlight of a vehicle can lead to a road surface reflection and cause erroneous detection by each recognition application 610 to 650, the light intensity is estimated, and the light having an intensity lower than a certain value is excluded from the target of the measure against reflection. As for the light that has an intensity equal to or higher than the certain value and can be considered to lead to a road reflection, the estimated light intensity is used as an indicator to determine the size and the degree of influence of the road surface reflection of the light.

The light three-dimensional position setting unit 430 estimates the three-dimensional position of the light from the light spot in the image. In the case of a stereo camera, the three-dimensional position can be estimated on the principle of triangulation. However, in the case of a monocular camera, only information on the position in the image is available, so that it is difficult to determine the three-dimensional position of the light source.

Thus, according to this embodiment, a three-dimensional constraint is applied to estimate the three-dimensional position of each light.

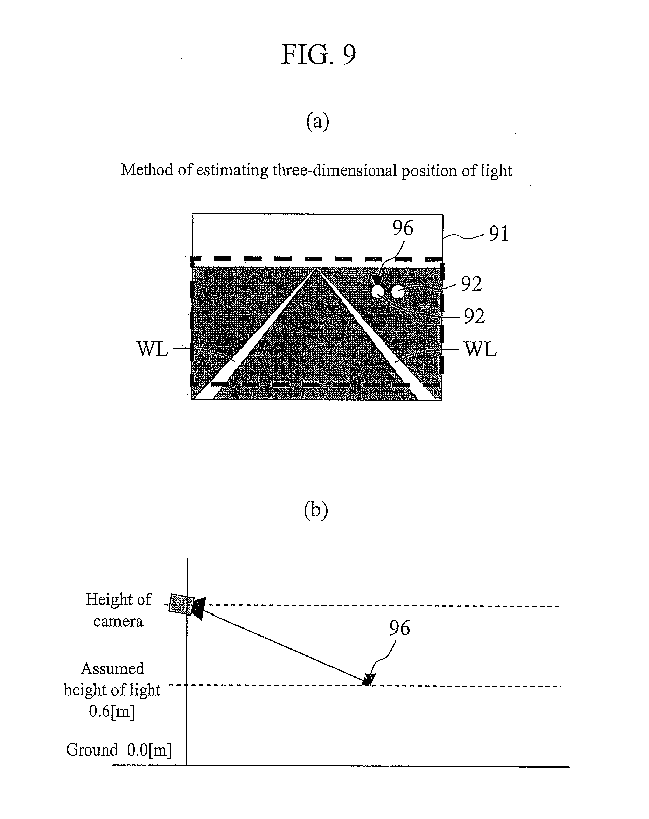

FIG. 9 includes diagrams for illustrating a light three-dimensional position estimation method. FIG. 9(a) is a schematic diagram showing an image taken by a rear camera, which is a monocular camera, and binarized, and FIG. 9(b) is a graph showing a relationship between the height of the camera and the assumed height of the light. In FIG. 9 (a), the symbol WL denotes the white line that separates lanes.

As shown in FIG. 9(a), from image information on light spots 92, 92 in the upper right area of an image 91, the light spots 92, 92 can be determined as being on one line in the three-dimensional world. The height of the lights of another vehicle (not shown) cannot be determined. However, according to this embodiment, on the assumption that the height of the lights is 0.6 m from the ground, the distance between the lights 92, 92 of the vehicle and the lights of the other vehicle in the longitudinal direction of the vehicle, the distance in the lateral direction of the vehicle, and the height of the lights from the ground are estimated.

As shown in FIG. 9(b), a point 96 at which a straight line connecting the center of the lens of the camera and the light spot to each other intersects with a plane at the height of 0.6 m from the ground is estimated as the three-dimensional position of the light.

In this example, the information on the three-dimensional position of the light 92 is used not only for determining whether or not the light 92 is a light that leads to a road surface reflection but also for estimating the three-dimensional position at which a road surface reflection occurs.

Since the estimated three-dimensional position of the light is based on the assumption that the height of the light is 60 cm from the ground, the three-dimensional position information contains a certain amount of error. If the inclination, irregularities or the like of the road surface can be accurately grasped, these factors can be taken into consideration to estimate the road surface reflection with higher accuracy. However, since the calculation is performed on the assumption that the height of the headlight of the vehicle is 60 cm from the ground, even the position of the reflection region estimated on the assumption that the road surface has no irregularities is sufficiently useful.

The light distribution pattern setting unit 440 sets the light distribution pattern of the light based on the three-dimensional position of the light set by the light three-dimensional position setting unit 430. An asymmetric light distribution pattern can be inverted depending on the country. If the light source is a point light source that is not a headlight but is estimated to lead to a diffuse reflection, a light distribution pattern different from that for the headlight is chosen. The light distribution pattern is set basically for estimating the position of a road surface reflection caused by a diffuse reflection.

However, as also shown in FIG. 4, although the light intensity has been estimated at this point in time, the intensity of the road surface reflection has not been estimated. Therefore, at this point in time, just the type of the light distribution pattern is shown, and the light information unit 400 selects map data including the contour lines in the word coordinate system shown in FIG. 10 as data information.

FIG. 10 includes diagrams showing a light distribution pattern in terms of illuminance. FIG. 10(a) is a plan view, and FIG. 10(b) is a side view. Since it is difficult to take into consideration the variations of the shape of the headlight and the posture of the vehicle body among different models, according to this embodiment, the reflection is calculated on the assumption that the shape of the headlight is the same regardless of the model, and the following vehicle is traveling straight in parallel with the vehicle. Light having a directivity is represented by the inner product of the optical axis vector of the directive headlight and the direction vector to the light source, and the diffuse reflection component is calculated from the inner product of the light source direction vector and the normal vector.

The road surface reflection coefficient determination unit in the road surface estimation unit 500 defined in FIG. 4 determines the diffuse reflection coefficient and the mirror reflection coefficient. Now, estimation of the diffuse reflection coefficient will be described.

The diffuse reflection coefficient is handled as shown in the diffuse reflection coefficient table (Table 1) below depending on the type of the road surface or weather and varies as the road surface condition or weather changes. The diffuse reflection coefficient is higher as the color of the road surface is brighter and is high when the road surface is dry. The diffuse reflection coefficient is low when the road surface is dark asphalt or when the road surface appears to be dark in the rain. If the road surface is wet, the mirror reflection coefficient is high, while the diffuse reflection coefficient is low.

[Table 1]

| Diffuse reflection coefficient table | | |
|---|---|---|
| | asphalt | concrete |
| dry road surface | 0.6 | 0.8 |
| wet road surface | 0.5 | 0.7 |
| road surface entirely covered with snow | 0.6 | 0.6 |

A general table of diffuse reflection coefficients is formed in this way and referred to with respect to the road surface condition or weather condition. The road surface condition can be determined based on map information from the navigation system or be fixed regardless of the type of the road surface, that is, of whether the road surface is asphalt or concrete. As for the weather condition, it is determined whether it is rainy or not based on wiper information to choose the diffuse reflection coefficient. Each region defined by contour lines is a region for which it is estimated that erroneous detection can occur and has a specific size, which is determined by the product of the diffuse reflection coefficient and the diffuse reflection intensity.

Based on the road surface reflection coefficient and the light intensity, a reflection region defined by contour lines is chosen from the light distribution pattern shown in FIG. 10(a). Since the light distribution pattern itself is based on the previous three-dimensional calculation of reflection as shown in FIG. 10(b), the result has to be converted into the regions in the actual image by the diffuse reflection position estimation unit 520.

The light distribution pattern indicates the intensity (illuminance) of the light of the headlight of a vehicle V illuminating the road with contour lines, and the light intensity decreases as it goes from a contour line A1 toward a contour line A4.

In real time processing, the diffuse light intensity is determined based on the area of the region having a high luminance extracted from the image, and one of the contour lines A1, A2, A3 and A4 is chosen from the light distribution pattern shown in FIG. 10(a) based on the diffuse light intensity and the diffuse reflectance. Thus, the estimation processing requires only the light source extraction processing, the choice of the light distribution pattern, and the conversion of the light distribution pattern into the two-dimensional coordinate system of the image and thus is quite simplified. The conversion of the light distribution pattern into the image coordinate system does not require very high resolution. Although the region in which reflection can occur is relatively large in the case of the lane recognition, the probability that the lane recognition itself is impossible is low. This is because, in the case of white line recognition, there is inevitably a moment when the lane mark comes into the nearby region, so that the probability that the white line cannot be recognized at all is quite low even if it is somewhat masked by the reflection light of the headlight of the following vehicle. Thus, erroneous detection can be prevented by reflecting the coarse sampling result into the image coordinate system to exclude a region from the processing target of the recognition applications including the lane recognition application.

According to this embodiment, as shown in FIG. 10, using the light distribution pattern in terms of illuminance of the headlight, the road surface reflection estimation unit 500 estimate, based on the light intensity and the road surface condition, which illuminance indicates the road surface reflection estimation image region that causes erroneous detection in the image.

<Road Surface Reflection Estimation Unit 500>

The road surface reflection estimation unit 500 estimates the reflection of the light on the road surface based on the Phong reflection model, which is often used for representing the shading of a computer graphics (CG) object. The Phong reflection model uses three light components to represent environment light and render the shading of the object placed in the environment.

The three light components are an environment light reflection component representing diffuse light from the surroundings that provides uniform brightness to an object, a diffuse reflection component representing scattering of incident light that provides a uniform surface luminance regardless of the point of view, and a mirror reflection component representing perfect reflection of light from a mirror or the like in which the angle of incident and the angle of reflection are equal to each other.

In the measure against reflection in the nighttime, only the diffuse reflection component and the mirror reflection component, which result in a difference in luminance from that of the surrounding road surface, are selected. FIG. 11 includes diagrams showing relationships between the incident light and the reflection light in the diffuse reflection and the mirror reflection. FIG. 11(a) is a diagram for illustrating the diffuse reflection, and FIGS. 11(b) and 11(c) are diagrams for illustrating the mirror reflection.

The perfect mirror reflection shown in FIG. 11(b) can occur only on a flat surface polished like a mirror. Thus, in this embodiment, the reflection model shown in FIG. 11(c), which is closer to the mirror reflection on the actual road surface and in which the reflection intensity is highest when the angle of incident and the angle of reflection is equal to each other and decreases as the angles deviate from each other, is used as a model of mirror reflection on the road surface.

As described above, the mirror reflection component is expressed by the mirror reflection coefficient Ks and the mirror reflection light intensity is as shown by the following formula, so that the luminance of the mirror reflection component is affected by these two factors. The property of the mirror surface described above, which varies with the acuteness and angle of reflection on the road surface, is expressed by the components described below.

The inner product of two verctors is calculated, the two vectors being direction vector R of a light beam perfectly reflected and direction vector V to the camera. The intensity of reflection of the light is highest when R and V agree with each other. Furthermore, the degree of convergence of the mirror reflection on the road surface is expressed by the inner product raised to $\alpha$-th power, where $\alpha$ denotes the degree of convergence of the mirror reflection.

$$Ks(R \bullet V)^{\alpha} i_s$$

In this embodiment, only the two light components that primarily cause erroneous detection through the road surface reflection of the headlight in the nighttime, that is, the diffuse reflection component and the mirror reflection component, are used to estimate the road surface reflection estimation image region. Since the reflection is handled as the separate diffuse reflection component and mirror reflection component, the cause of erroneous detection including the whiteout caused by an actual road surface reflection can be excluded, while avoiding unwantedly reducing the recognition rate or the detection rate.

This method is an estimation processing except for the image processing for searching for the point light source and does not involve an image scan processing for searching for an actual reflection region. Therefore, compared with the technique disclosed in JP Patent Publication (Kokai) No. 11-203446A (1999) that involves actual image processing of the reflection region of the image, the processing load can be considerably reduced. Thus, this method is suitable for real time processing.

In the case where a camera that does not perform an exposure control for recognition, such as a rear camera for parking assistance, the light and the road reflection can often be merged to cause a whiteout. In such a case, according to this embodiment, the whiteout region is regarded as a large light, so that the road surface reflection estimation image region that can cause erroneous detection outside the whiteout region can also be masked. Therefore, even if the image is taken under a situation where the light and the road reflection are not separated from each other, this measure against road surface reflection can be a sufficiently effective measure against erroneous detection for each application. In an environment the light and the road surface reflection are merged to cause a whiteout, a stripe of light that can lead to erroneous detection is likely to occur in the region surrounding the whiteout region.

According to this embodiment, whether the whiteout is the light and the road surface reflection merged with each other or a large light that actually exists is not determined, but the road surface reflection estimation image region is estimated on the assumption that there is a large light. Thus, the road surface reflection estimation image region contains a certain amount of error, if the whiteout is actually formed by the light and the road surface reflection merged with each other.

However, whether the whiteout is formed by a large light that actually exists or the light and the road surface reflection merged with each other, a stripe of light that can lead to erroneous detection always occurs in the surrounding region. Thus, even if the road surface reflection estimation image region is estimated on the assumption that there is a large light, the region that is desirably excluded from the cause of erroneous detection can be successfully masked, and thus, the road surface reflection that causes erroneous detection can be successfully excluded from the region to be processed by each recognition application.

In the road surface reflection estimation unit 500, the road surface reflection coefficient determination unit 510 determines the road surface reflection coefficient. The road surface reflection coefficient determination unit 510 determines the road surface reflection coefficient according to the traveling environment. The traveling environment includes at least one of the weather condition, the road surface condition, the information provided by the car navigation system, the operational state of the wiper and time.

Reflection of light on an object can be expressed by the light source environment, the reflection coefficient of the object surface, the positional relationship between the object and the light source and the point of view. In the light information unit 400, the light intensity has already been estimated, and the light distribution pattern has been set. In addition, the relative positions of the light and the camera on the vehicle have been set as the light three-dimensional position. For example, weather is determined based on the operational state of the wiper, and the diffuse reflection coefficient and the mirror reflection coefficient are chosen. The coefficients are chosen in such a manner that the diffuse reflection has a larger influence in the road surface reflection if the weather is clear, and the mirror reflection has a larger influence if the weather is rainy.

In describing the light distribution pattern, since the diffuse reflection coefficient table has already been described, a mirror reflection coefficient table (Table 2) will be now described. When the color of the road is dark, or when the road surface is wet, light is more intensely reflected on the road surface, and the mirror reflection component is larger, so that the mirror reflection coefficient is larger. On the other hand, when the road surface is dry, or when the road surface is made of concrete, the mirror reflection has a smaller influence, and the mirror reflection coefficient is smaller.

[Table 2]

| Mirror reflection coefficient table | | |
| --- | --- | --- |
| | asphalt | concrete |
| dry road surface | 0.7 | 0.6 |
| wet road surface | 0.9 | 0.8 |
| road surface entirely covered with snow | 0.7 | 0.7 |

If the road surface reflection coefficient can be dynamically estimated, the reflection region can be estimated based on the estimated reflection coefficient, thereby more accurately estimating the road surface reflection estimation image region. Therefore, the cause of erroneous detection for each recognition application can be adequately suppressed, while avoiding unwantedly reducing the processing region to cause a detection failure. As shown in FIG. 4, the road surface reflection coefficient determination unit 510 can also determine the road surface reflection coefficient based on information from the weather determination unit 511, the road surface condition determination unit 512, the car navigation system 513, the wiper 514 or the like.

The diffuse reflection position estimation unit 520 estimates the three-dimensional position of the diffuse reflection region where the diffuse reflection causes a whiteout on the road surface. As shown in FIG. 11(a), the diffuse reflection is a reflection that occurs as a result of light scattering regardless of the angle incident of the light, so that the diffuse reflection is incident on the camera from the entire surrounding region in the light distribution pattern shown in FIG. 10.

However, since the intensity of the illumination of the light varies with the site on the road surface according to the light distribution pattern, the diffuse reflection region where the diffuse reflection is estimated to cause a whiteout is limited. According to this embodiment, it is determined to which of the contour lines A1 to A4 of the light distribution pattern the whiteout extends depending on the light intensity.

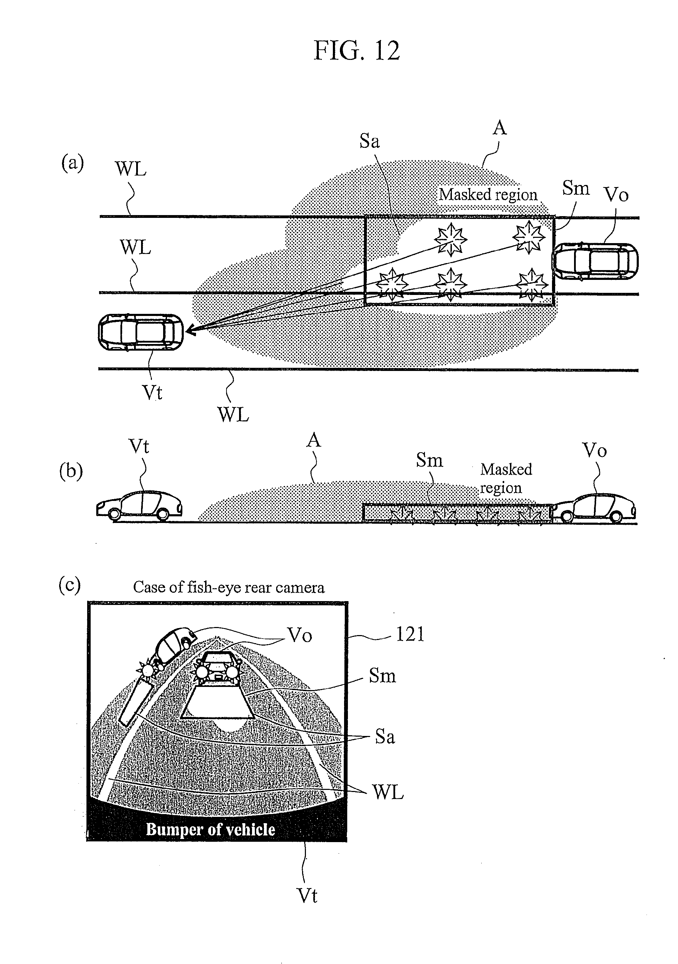

FIG. 12 includes diagrams for illustrating a method of estimating the diffuse reflection region. FIGS. 12(a) and 12(b) show the positions of the vehicle and the following vehicle, the state of the diffuse reflection and the masked region, and FIG. 12(c) is a schematic diagram showing an image taken by a fish-eye rear camera on the vehicle.

In the light information unit 400, the light intensity estimation unit 420 has estimated the light intensity, the three-dimensional position setting unit 430 has set the three-dimensional position of the light, and the light distribution pattern setting unit 440 has set the light distribution pattern of the light. Therefore, it can be considered that the relative position of the light with respect to the camera shown in FIG. 12 has already been determined. Besides, the road reflection coefficient determination unit 510 has already determined the diffuse reflection coefficient.

Thus, as shown in FIGS. 12(a) and 12(b), the position of the following vehicle Vo is determined from the position of the headlight, and based on the light distribution pattern and the light intensity of the headlight and the diffuse reflection coefficient, it is determined to which region in the light distribution pattern the luminance difference that causes erroneous detection due to the diffuse reflection occurs.

That is, based on the light intensity, the light position and the light distribution pattern estimated by the light information unit 400 and the diffuse reflection coefficient determined by the road surface reflection coefficient determination unit 510 in the road surface reflection estimation unit 500, the diffuse reflection position estimation unit 520 determines to which contour line the luminance difference that causes erroneous detection occurs. As a result, the three-dimensional position on the road surface of the reflection region that causes erroneous detection in image recognition can be determined.

For example, in the case shown in FIGS. 12(a) and 12(b), the region extending to the contour line A2 in FIG. 10 is estimated to be a diffuse reflection region Sa. The symbol Sm in FIG. 12 denotes an example of the masked region set by the recognition application. In the example shown in FIG. 12(c), in an image 121 taken by the rear camera, three-dimensional diffuse reflection regions Sa are estimated that cause erroneous detection in image recognition due to the diffuse reflections caused on the road surface by two following vehicles Vo.

The mirror reflection position estimation unit 530 estimates a three-dimensional mirror reflection region Sb that causes erroneous detection in image recognition due to the mirror reflection that occurs on the road surface.

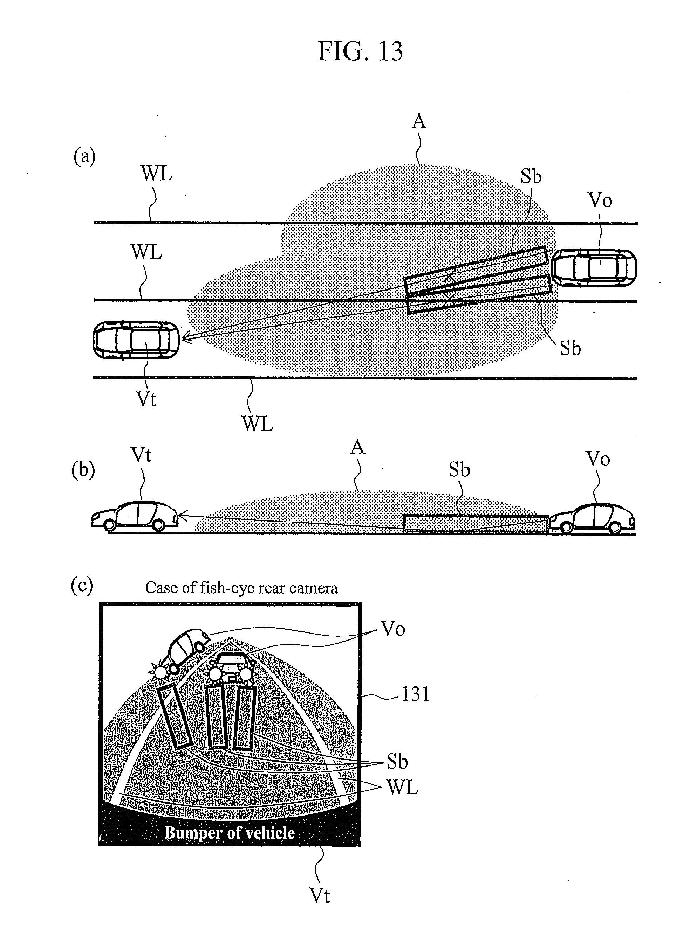

FIG. 13 includes diagrams for illustrating a method of estimating the mirror reflection region. FIGS. 13(a) and 13(b) show the positions of the vehicle and the following vehicle, the state of the mirror reflection and the masked region, and FIG. 13(c) is a schematic diagram showing an image taken by the fish-eye rear camera on the vehicle.

Since the mirror reflection is a reflection in which the angle of incident of the light and the angle of reflection are equal to each other as shown in FIG. 11(b), the light from the headlight of the following vehicle Vo is incident on the road surface and the reflected light is incident on the rear camera of the vehicle Vt as shown in FIGS. 13(a) and 13(b).

However, the mirror reflection that occurs on the actual road surface is not a perfect mirror reflection such as shown in FIG. 11(b) but has a property that the reflection occurs not only at the angle of reflection equal to the angle of incident, with the highest intensity, but also at angles around it with relatively high intensities as shown in FIG. 11(c). Therefore, as shown in FIG. 13, the region estimated to cause a whiteout is limited to a region Sb having both a certain length and a certain width. The mirror reflection position estimation unit 530 estimates the reflection region Sb in the three-dimensional world surrounded by a thick line based on the mark "x" as shown in FIG. 13(a).

According to this embodiment, the region estimated to suffer from a whiteout is changed by changing the width or length of the mirror reflection according to the light intensity. The mirror reflection region is hardly affected by the light distribution pattern and is determined primarily by the position of the headlight of the following vehicle Vo and the position of the camera on the vehicle Vt.

In the light information unit 400, the light intensity estimation unit 420 has estimated the light intensity, and the light three-dimensional position setting unit 430 has set the three-dimensional position of the light. Besides, the road surface reflection coefficient setting unit 510 has set the mirror reflection coefficient. As described above concerning the mirror reflection coefficient table, the choice of the reflection coefficient is changed depending on the road condition or whether the road surface is dry or wet. Although the light distribution pattern setting unit 440 has set the light distribution pattern of the light of the following vehicle Vo, the light distribution pattern is not used in the estimation of the mirror reflection position. Thus, as shown in FIGS. 13(a) and 13(b), the position of the following vehicle Vo is determined from the position of the headlight, and based on the estimated light intensity and the mirror reflection coefficient, the mirror reflection region Sb in which the mirror reflection causes a whiteout can be estimated.

The mirror reflection region Sb is set to extend toward to rear camera on the vehicle Vt and have a length enough to cover beyond the position of the mirror reflection on the road surface toward the vehicle Vt and a width approximately equal to the width of the headlight. For example, in the case shown in FIG. 13(c), in an image 131 taken by the rear camera, mirror reflection whiteout regions Sb having a predetermined width that extends from the headlights of two following vehicles Vo toward the rear camera on the vehicle Vt are set.

Based on the diffuse reflection region Sa estimated by the diffuse reflection position estimation unit 520 and the mirror reflection region Sb estimated by the mirror reflection position estimation unit 530, the road surface reflection image region estimation unit 540 calculates the road surface reflection estimation image region in the image. Since the road surface reflection estimation image region has been determined to be on the road surface, the road surface reflection image region estimation unit 540 can determine the three-dimensional position in the plane of the road surface by limiting the height to the road surface and acquiring positional information on the regions Sa and Sb from the diffuse reflection position estimation unit 520 and the mirror reflection position estimation unit 530, respectively.

The road surface reflection image region estimation unit 540 determines the road surface reflection estimation image region from the information on the three-dimensional position according to internal and external parameters of the camera, including settings and the angle of view of the camera, and passes the image region information on the determined road surface reflection estimation image region to each recognition application for use for prevention of erroneous detection. In this way, the reflection components of the light of the headlight that causes erroneous detection are identified as the diffuse reflection component or the mirror reflection component according to the Phong reflection model, the conditions specific to the onboard camera are assumed, and the diffuse reflection component and the mirror reflection component are substituted into the calculation formula with a practically useful precision to estimate the road surface reflection estimation image region in the image that causes erroneous detection, thereby preventing erroneous detection. In particular, since the fish-eye camera is used, the mirror reflection region, which would otherwise extend downward in the image, extends obliquely toward the camera on the vehicle. Whether the camera is a fish-eye camera or a normal orthographic camera, the reflection region in the image can be accurately estimated by using the reflection region estimation based on the light reflection model and the geometry of each camera. Regardless of the type of the camera, the diffuse reflection position estimation unit 520 and the mirror reflection position estimation unit 530 estimate a region on the route in the real world. The road surface reflection image region estimation unit 540 performs a coordinate transformation from the three-dimensional position in the real world to the position in the image. The road surface reflection image region estimation unit 540 is configured to be capable of estimating the reflection region in the image simply by switching between the models of the geometries of the cameras including the fish-eye camera model and the orthographic camera model.

<Onboard Environment Recognition Unit 600>

In the following, there will be described how each recognition application prevents erroneous detection due to a road surface reflection by using the road surface reflection estimation image region estimated by the road surface reflection image region estimation unit 540 described above.

The onboard environment recognition unit 600 performs lane recognition, road shoulder recognition, carriageway recognition, road surface sign recognition and road surface condition recognition as environment recognitions taking measures against road surface reflection.

The lane recognition unit 610 is a recognition application that recognizes a lane mark (white line) used to issue a lane deviation alert or prevent a lane deviation and, as shown in FIG.6, has a processing region setting unit 611, a reflection region mask unit 612, a white line feature extraction unit 613, an image lane extraction unit 614 and a vehicle coordinate lane estimation unit 615.

According to the conventional lane recognition, the road surface reflection of the light of another vehicle seems like a white line, so that there is a problem that the white line feature is erroneously extracted. Although the conventional method can identify a region having a high luminance as a mirror reflection region and excludes the region as a cause of erroneous detection, the conventional method erroneously detects a pale white stripe of reflection light around the region as a white line.

Thus, the lane recognition unit 610 taking measures against road surface reflection according to this embodiment prevents erroneous detection by performing a masking processing to exclude the road surface reflection estimation image region from the processing region in order to avoid extracting the white line feature from the image.

Specifically, the processing region setting unit 611 sets a processing region from which the white line feature is to be extracted from the image, the reflection region masking unit 612 excludes the road surface reflection estimation image region that causes erroneous detection from the set processing region, and the white line feature extraction unit 613 performs a processing to extract the white line feature from the remaining processing region from which the road surface reflection estimation image region has been excluded. Since the processing of searching for the white line feature is not performed in the region in which a road surface reflection is estimated to occur to cause a white stripe of light, most of the white line features are extracted from the processing region for lane recognition.

Even if some reflection occurs outside of the estimated region, and a white line feature is erroneously extracted in the region, such noise can be excluded by the processing of extracting a lane in the image or based on the linearity of the white line features, and thus, erroneous detection can be prevented.

Then, the image coordinate lane estimation unit 615 estimates the lateral position in the lane, the yaw angle and the curvature of the vehicle based on the line extracted in the image, thereby preventing erroneous detection. In particular, it is extremely difficult for the onboard rear camera to recognize a white line behind the vehicle because it is not illuminated by the headlight. Therefore, a white stripe of light caused by reflection would otherwise tend to cause erroneous detection. However, such erroneous detection can be successfully prevented by applying the Phong reflection model using the property of light reflection to the information available in the onboard camera environment.

As with the lane recognition unit 610 described above, the road shoulder recognition unit 620 sets a processing region from which a road shoulder feature is to be extracted, excludes the road surface reflection estimation image region that is likely to cause erroneous detection from the set processing region, and extracts the road shoulder feature from the remaining processing region from which the road surface reflection estimation image region has been excluded. In this way, the feature to be extracted from the region that causes erroneous detection can be removed, and erroneous detection can be prevented. The subsequent flow of the process is the same as that of the process performed by the lane recognition unit 610. That is, the position of the linear road shoulder in the image is extracted based on the road shoulder feature, the lateral position, the yaw angle and the curvature of the road shoulder in the vehicle coordinate system are estimated.

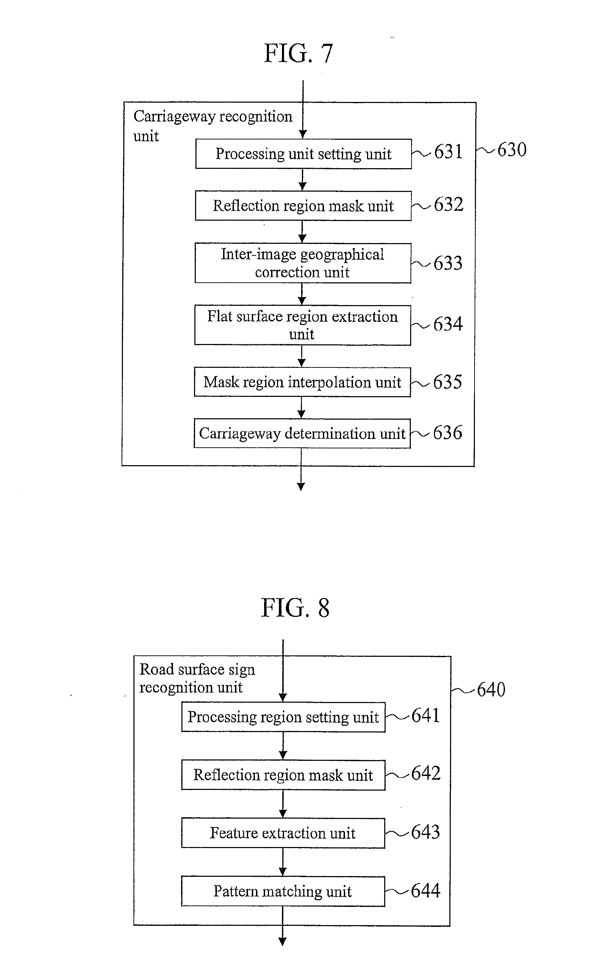

As shown in FIG. 7, in the carriageway recognition unit 630, a processing region setting unit 631 sets a processing region. The carriageway recognition cannot discriminate between a three-dimensional object and a road surface. Thus, in order that the normal flat surface region extraction processing is not performed in the road surface reflection region that causes erroneous detection, a reflection region mask unit 632 removes the reflection region from the processing region set by the processing region setting unit 631.

Then, an inter-image geographical correction unit 633 performs an inter-image geographical correction to determine whether the set processing region is a flat road surface as in the case of the normal processing, and a flat surface region extraction unit 634 performs extraction of a flat road surface region for which the difference between images is small. Then, a mask region interpolation 635 performs an interpolation of the region determined to be the road surface reflection region using the result of determination of three-dimensional objects in the surroundings and the result of determination the light, and then, a carriageway determination unit 636 determines the carriageway.

In the road surface sign recognition unit 640, a processing region setting unit 641 sets a processing region. The processing region is set at the time when recognition of a road surface sign is desired. The processing region may be set only when recognition of a road surface sign is desired or may be constantly set for recognition based on map information from the car navigation system, GPS positional information, the behavior of the vehicle or the result of the normal sign recognition.

Then, a reflection region mask unit 642 excludes the reflection region from the processing region, and a feature extraction unit 643 performs a processing of extracting a feature from the processing region from which the reflection region has been excluded.

Then, a pattern matching unit 644 performs a pattern matching based on the extracted feature to recognize the road surface sign. According to the conventional techniques, the road surface reflection serves as noise to cause erroneous detection.

If a road surface sign is completely covered with the road surface reflection, it is difficult to detect the road surface sign. However, if the road surface sign is only partially covered with the road surface reflection, the pattern matching unit 644 can mask the region affected by the road surface reflection as the road surface reflection estimation image region, thereby determining whether the part of the road surface sign excluding the road surface reflection estimation image region matches to the desired pattern. Thus, the number of detection failures and erroneous detections of road surface signs can be reduced.

A road surface condition recognition unit 650 recognizes the road surface condition, such as dry, wet or covered with snow, and uses the recognition result to determine the road reflection coefficient. The flow of the process is substantially the same as that of the process shown in FIG. 8. A processing region for recognition of the road condition is first set, and then, the road surface reflection estimation image region is excluded from the processing region. Then, a road condition feature is extracted from the remaining processing region from which the road surface reflection estimation image region has been excluded, and pattern match is performed to recognize the road condition. In this way, features that cause erroneous detection can be removed from the processing region, thereby preventing erroneous detection of the road surface condition.

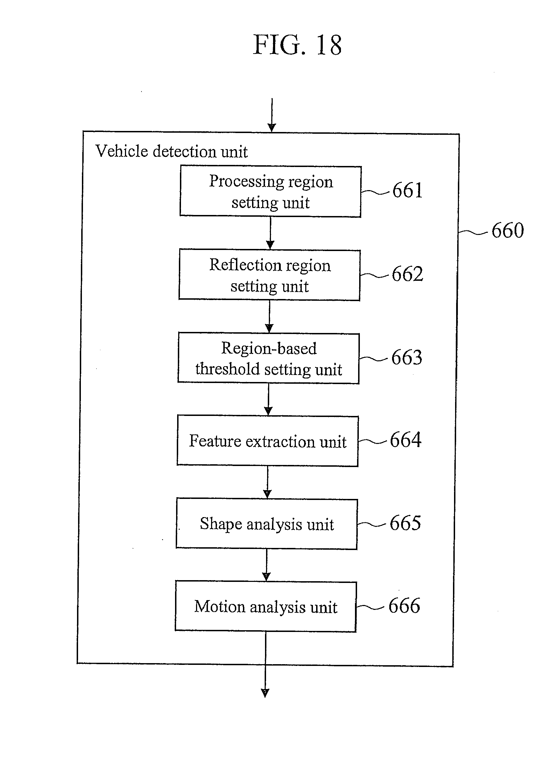

As shown in FIG. 18, in the case of the rear camera, the vehicle detection unit 660 is controlled to detect a vehicle with which the vehicle is likely to collide during a lane change and to issue an alert during the lane change or prevent the lane change. In the case of the onboard camera attached to the front of the vehicle, the vehicle detection unit 660 is used to prevent collision or to follow a vehicle in front of the vehicle.

In vehicle detection, first, a processing region setting unit 661 sets a region that is to be searched for a vehicle by the application as a processing region. In addition, a reflection region setting unit 662 identifies any region in the processing region in which a road surface reflection can occur as a road surface reflection region. The other applications described above exclude all the regions in which a road surface reflection can occur from the processing region. However, in the vehicle detection, there is a vehicle to be detected in the close proximity of the road surface reflection region. Therefore, if the road surface reflection region or the light source is excluded from the processing region, it is obvious that the vehicle cannot be detected.

Thus, the presence of the headlight and the road surface reflection itself is regarded as a piece of information that a vehicle exists there, and the position of the headlight and the position of the road surface reflection thereof are taken into consideration. A region-based threshold setting unit 663 performs a region-based threshold setting by taking the reflection region into consideration so that features of the vehicle including the vehicle body and the headlight can be easily extracted. In the road surface reflection region, the threshold is set so that features are less likely to be extracted. The headlight having a high luminance is extracted as a feature since the presence thereof itself is likely to indicate the presence of a vehicle. In the region behind the vehicle that is not illuminated by the headlight, the threshold for vehicle feature extraction is set to be low so that a feature of a vehicle body can be readily extracted. Based on the thresholds set in this way, a feature extraction unit 664 extracts a vehicle feature. Based on the extracted feature, a shape analysis unit 665 performs a shape analysis to determine whether the probability that the extracted feature indicates a vehicle is high. If the probability that the feature indicates a vehicle is high, a motion analysis unit 666 analyzes the motion of the feature with time to determine whether or not the probability that the feature indicates a vehicle is high.

[Embodiment 2]

An embodiment 2 is characterized in that a road surface reflection estimation image region in the image caused by the evening or rising sun is estimated. The flow of the process of masking the road surface reflection estimation image region is basically the same as that in the embodiment 1, and therefore, only major differences from the embodiment 1 will be described in detail.

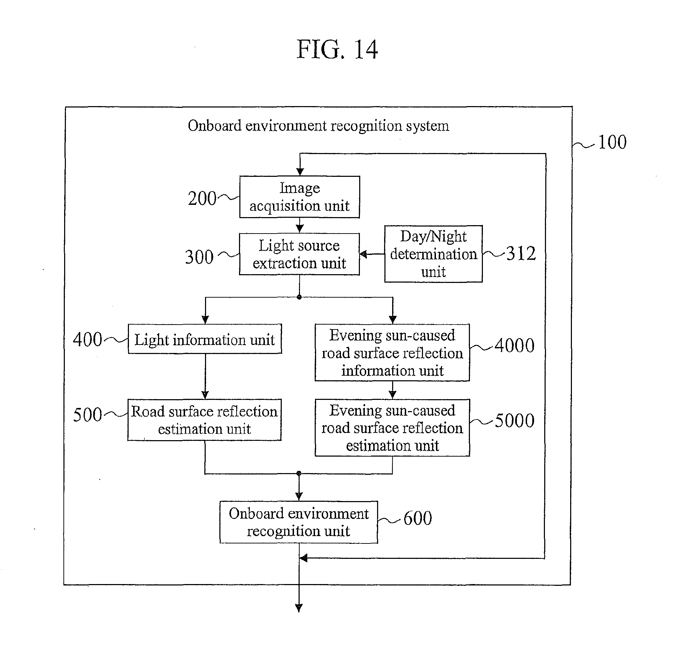

As shown in FIG. 14, the vehicle environment recognition system 100 has the day/night determination unit 312 that determines whether it is day or night and, based on the result of the determination by the day/night determination unit 312, selectively uses the light information unit 400 and the road surface reflection estimation unit 500 in the nighttime when the influence of the sunlight does not have to be taken into consideration or an evening sun-caused road surface reflection information unit 4000 and an evening sun-caused road surface reflection estimation unit 5000 in the daytime, such as morning, noon and afternoon, when the influence of the sunlight has to be taken into consideration.

The image acquisition unit 200, the light source extraction unit 300 and the onboard environment recognition unit 600 have the same configurations as those in the embodiment 1. Information, such as the position of the extracted light source, the center of gravity and the circumscribed rectangle, are input, and the region to be masked in the image is output, thereby achieving commonality of these units.

According to this embodiment, the light information unit 400 and the road surface reflection estimation unit 500 or the evening sun-caused road surface reflection information unit 4000 and the evening sun-caused road surface reflection estimation unit 5000 are selectively used. However, the processings and configurations of these units have many similarities. Thus, for example, the light information unit 400 may be kept unchanged, and a part of the processing thereof may be switched to selectively take measures against the reflection of the light in the nighttime or measures against the road surface reflection of the evening sun. Alternatively, both the measures against the reflection of the light in the nighttime and the measures against the road surface reflection of the evening sun may be always taken in parallel. Alternatively, the light source extraction unit 300, the light information unit 400 or the evening sun-caused road surface reflection information unit 4000 may determine whether the light source is a light or a road surface reflection and take the measures against the road surface reflection.

Based on the result of the determination by the day-night determination unit 312, it is determined whether the light source extracted by the light source extraction unit 300 is a road surface reflection of a light or a road surface reflection of the evening (or rising) sun, and based on the result of the determination, the measures against the road surface reflection is taken. If the light source is the road surface reflection of the headlight in the nighttime, the light information unit 400 and the road surface reflection estimation unit 500 perform their respective processings to prevent erroneous detection. On the other hand, if it is not in the nighttime that the light source is extracted, the light source is estimated to be the evening or rising sun, and the evening sun-caused road surface reflection information unit 4000 and the evening sun-caused road reflection estimation unit 5000 perform their respective processings to prevent erroneous detection.

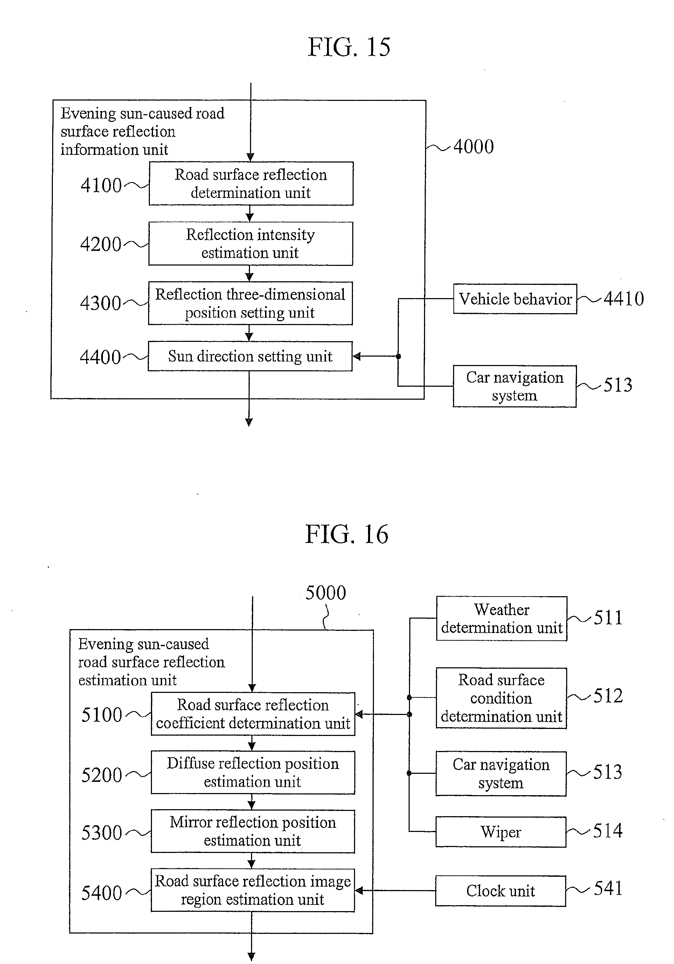

The processing performed by the evening sun-caused road surface reflection information unit 4000 is basically similar to the processing performed by the road surface reflection estimation unit 400, and as shown in FIG. 15, a road surface reflection determination unit 4100 determines whether or not the light source is a road surface reflection. The processing differs from the processing of extracting a headlight as a light source in the nighttime in that, in the case of extracting a road surface reflection of the sunlight, the sun itself is not detected, but a road surface reflection region having a high luminance is extracted, unlike the case of estimating a road surface reflection of the headlight in the nighttime, where a region above the road is also searched to extract the headlight itself that is the light source. This is because even if the image includes a road surface reflection region, the sun is not always included in the field of view of the image. In addition, in the case of the sunlight, the target is too large and can cause a whiteout over the entire sky, so that it is possible that the position of the sun cannot be successfully extracted.

Another reason for estimating the road surface reflection region is that, in considering erroneous detection of the road surface reflection of the sunlight, the only primary cause of a luminance difference from the surrounding road surface is the mirror reflection. Thus, even if the position of the light source is previously unknown as in the case of determining the diffuse reflection component, the direction of the sun causing the mirror reflection can be derived from the three-dimensional positions of the camera and the road surface reflection. The reason why the diffuse reflection is unlikely to cause erroneous detection in the case of the sunlight can be readily seen if the diffuse reflection component is considered on the assumption that the sunlight is a point light source that exists at the infinite distance. That is, in the case of the headlight that is a point light source that is highly directive and exists at a short distance, it is obvious from the formula that the variation in luminance in the surroundings is shown by contour lines. However, in the case of a point light source that exists at the infinite distance, the direction vector to the point light source existing at the infinite distance and the normal vector of the object that is assumed to be the road surface do not change at any point on the road. In other words, the diffuse reflection of the light from the sun existing at the infinite distance only uniformly illuminates the road surface and produces little gradation in luminance on the road surface and therefore is unlikely to be a cause of erroneous detection for each recognition application. Thus, it can be seen that only the mirror reflection of the sunlight on the road surface is likely to be a cause of erroneous detection.

Thus, the road surface reflection region is extracted, and a reflection intensity estimation unit 4200 estimates the intensity of the road surface reflection light. Then, a reflection three-dimensional position setting unit 4300 estimates the three-dimensional position of the region of the road surface in which the reflection occurs, and a sun direction setting unit 4400 estimates the direction of the sun that causes the road surface reflection. The sun direction setting unit 4400 can use a vehicle behavior 4410 for correcting the directions of the sun and the vehicle or derive the direction of the sun from the direction of traveling and the GSP positional information from the car navigation system 513.

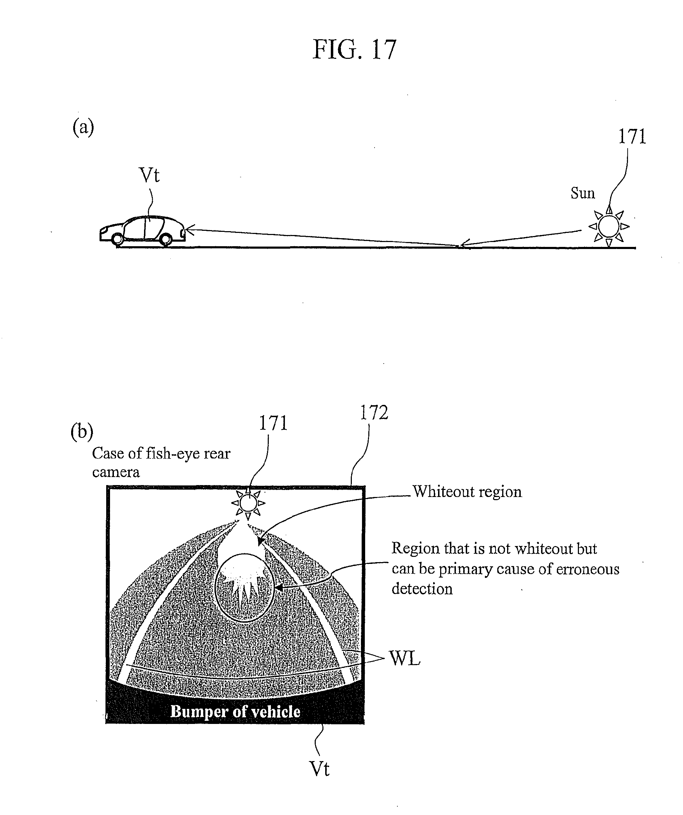

FIG. 17 includes diagrams for illustrating a method of estimating an evening sun road surface reflection region. FIG. 17(a) is a diagram showing the positions of the vehicle and the sun and the state of the mirror reflection, and FIG. 17(b) is a schematic diagram showing an image taken by the fish-eye camera on the vehicle. Unlike the configuration according to the embodiment 1, the position of the sun 171 is the position of the light source as shown in FIG. 17(a), and the road surface reflection region is the region extracted by the image processing. Thus, as shown in an image 172 in FIG. 17(b), the direction in which a white stripe of light, which cannot be called a whiteout but can be a cause of erroneous detection, extends is estimated from the positional relationship between the road surface reflection region and the sun 171.

Since the positions of the sun and the road surface reflection can be determined, then, as shown in FIG. 16, in the evening sun-caused road surface reflection estimation unit 5000, a road surface reflection coefficient determination unit 5100 determines the road surface reflection coefficient, and a mirror reflection position estimation unit 5300 estimates the diffuse reflection region and the mirror reflection region including a cause of erroneous detection. After that, as in the embodiment 1, a road surface reflection image region estimation unit 5400 estimates the road surface reflection estimation image region from the diffuse reflection region and the mirror reflection region and passes the estimation result to each recognition application, and each recognition application performs masking to prevent an image processing from being performed in the road surface reflection estimation image region.

In actuality, the diffuse reflection component of the evening sun road surface reflection is determined not to be a cause of erroneous detection and is not used. Even though the diffuse reflection component is used in the case of the headlight during sunset or other light sources, the diffuse reflection coefficient is set to be 0.0 in the case of the evening or rising sun, and the diffuse reflection component is not used for the reflection region estimation.

In this way, basically the same concept is applied to reflections of other types of light than the headlight to identify the light source that causes erroneous detection, estimate the road surface reflection position, the road surface reflection coefficient and the like, thereby estimate the road surface reflection estimation image region that can cause erroneous detection, and exclude the road surface reflection estimation image region form the processing region of each recognition application, thereby preventing erroneous detection.

Since such a physical light model is used, it is possible to avoid unnecessarily increasing the size of the masking region and prevent unnecessary detection failures.

Compared with the conventional techniques, measures against reflection can be taken without a stereo camera, and as shown in FIG. 17(b), even in the case of a monocular camera, a burdensome processing, such as image scanning up to a region where no whiteout due to a mirror reflection occurs, is not necessary.

In particular, the processing performed by the light source extraction unit 300 is a processing suitable for hardware dedicated for image processing, and therefore, the light source can be extracted in a shorter time in an environment provided with the hardware dedicated for image processing. The other processings than the light source extraction processing do not involve the image scanning processing, so that erroneous detection of a road surface reflection can be prevented while reducing the processing time.

The present invention is not limited to the specific embodiments described above, and various modifications can be made without departing from the spirit of the present invention.

DESCRIPTION OF SYMBOLS

100    onboard environment recognition system

200    image acquisition unit

300    light source extraction unit

400    light information unit

410    light determination unit

420    light intensity estimation unit

430    light three-dimensional position setting unit

440    light distribution pattern setting unit

500    road surface reflection estimation unit

510    road surface reflection coefficient determination unit

| 511 | weather determination unit |
| 512 | road surface condition determination unit |
| 520 | diffuse reflection position estimation unit |
| 530 | mirror reflection position estimation unit |
| 540 | road surface reflection image region estimation unit |
| 541 | clock unit |
| 600 | onboard environment recognition unit |
| 610 | lane recognition unit |
| 620 | road shoulder recognition unit |
| 630 | carriageway recognition unit |
| 640 | road surface sign recognition unit |
| 650 | road surface condition recognition unit |
| 4000 | evening sun-caused road surface reflection information unit |
| 4100 | road surface reflection determination unit |
| 4200 | reflection intensity estimation unit |
| 4300 | reflection three-dimensional position setting unit |
| 4400 | sun direction setting unit |
| 4410 | vehicle behavior |
| 5000 | evening sun-caused road surface reflection estimation unit |
| 5100 | road surface reflection coefficient determination unit |
| 5200 | diffuse reflection position estimation unit |
| 5300 | mirror reflection position estimation unit |
| 5400 | road surface reflection image region estimation unit |

**Claims**

1. An onboard environment recognition system that recognizes an environment surrounding a vehicle based on an image taken by an onboard camera, comprising:

   a light source extraction unit (300) that extracts a light source from said image;
   a light information unit (400) that extracts light whose light source causes a road surface reflection that causes erroneous detection in environment recognition based on the position of said light source in said image;
   a road surface reflection estimation unit (500) that estimates a road surface reflection estimation image region in said image in which said light is reflected on a road surface; and
   an onboard environment recognition unit (600) that recognizes the environment surrounding the vehicle based on said road surface reflection estimation image region.

2. The onboard environment recognition system according to claim 1, wherein said light information unit (400) estimates light information including one of the light intensity, the three-dimensional position and the light distribution pattern of the extracted light, and
said road surface reflection estimation unit (500) estimates, based on said light information, the road surface reflection estimation image region in said image in which said light is reflected on the road surface.

3. The onboard environment recognition system according to claim 2, wherein said light source extraction unit (300) extracts a point light source having an area equal to or larger than a preset threshold from said image as said light source.

4. The onboard environment recognition system according to claim 2, wherein said light information unit comprises:

a light determination unit (410) that determines whether or not said light source is said light based on the position in the image of the light source extracted by said light source extraction unit (300);
a light intensity estimation unit (420) that estimates the light intensity of said light based on the area of a region in said image in which said light causes a whiteout;
a light three-dimensional position setting unit (430) that sets the three-dimensional position of said light based on the position of the light in the image; and
a light distribution pattern setting unit (440) that sets the light distribution pattern of said light based on the three-dimensional position of said light set by said light three-dimensional position setting unit, and
a light having a light intensity lower than a preset light intensity is not determined to be the light that causes erroneous detection, the light intensity being estimated by said light intensity estimation unit (420).

5. The onboard environment recognition system according to claim 1, wherein said road surface reflection estimation unit (500) estimates the positions of a diffuse reflection and a mirror reflection caused on a road surface by said light and estimates said road surface reflection estimation image region based on the estimated positions of the diffuse reflection and the mirror reflection.

6. The onboard environment recognition system according to claim 5, wherein said road surface reflection estimation unit (500) determines a road surface reflection coefficient according to a traveling environment and changes said road surface reflection estimation image region according to the road surface reflection coefficient.

7. The onboard environment recognition system according to claim 6, wherein said traveling environment is at least one of a weather condition, a road surface condition, information supplied from a car navigation system, an operational state of a wiper, and time.

8. The onboard environment recognition system according to claim 1, wherein said onboard environment recognition unit (600) identifies said road surface reflection estimation image region as a non-detection region for a recognition application that recognize the environment surrounding said vehicle.

9. The onboard environment recognition system according to claim 8, wherein said onboard environment recognition unit (600) includes, as said recognition application, at least one of a lane recognition application, a road shoulder recognition application, a carriageway recognition application, a road surface sign recognition application and a road surface condition recognition application.

10. The onboard environment recognition system according to claim 1, further comprising:

a day/night determination unit (312) that determines whether it is day or night;
an evening sun-caused road surface reflection information unit that determines whether or not the light source extracted by said light source extraction unit is the sunlight that causes erroneous detection in environment recognition in a case where the day/night determination unit determines that it is in a time zone when the sunlight has to be taken into consideration; and
an evening sun-caused road surface reflection estimation unit (4000) that estimates the road surface reflection estimation image region in said image in which the sunlight determined to cause erroneous detection by the evening sun-caused road surface reflection information unit is reflected on a road surface,
wherein said onboard environment recognition unit (600) recognizes the environment surrounding the vehicle based on the road surface reflection estimation image region estimated at least one of the evening sun-caused road reflection estimation unit (4000) and said road surface reflection estimation unit (500).

11. The onboard environment recognition system according to claim 10, wherein said evening sun-caused road surface reflection information unit (4000) comprises:

a road surface reflection determination unit (4100) that determines whether or not the light source is a reflection on the road surface;
a reflection intensity estimation unit (4200) that estimates the intensity of the road surface reflection light;
a reflection three-dimensional position setting unit (4300) that sets the three-dimensional position of the road surface on which the reflection occurs; and
a sun direction setting unit (4400) that sets the direction of the sun that causes the road surface reflection.

12. The onboard environment recognition system according to claim 10, wherein said evening sun-caused road surface reflection estimation unit (4000) estimates a diffuse reflection region and a mirror reflection region formed on the road surface by said light source and estimates said road surface reflection estimation image region based on the estimated diffuse reflection region and mirror reflection region.

# FIG. 1

Onboard environment recognition system ~100

200 ~ Image acquisition unit

300 ~ Light source extraction unit

400 ~ Light information unit

500 ~ Road surface reflection estimation unit

600 ~ Onboard environment recognition unit

# FIG. 2

Light source extraction unit ~300

Binarization unit ~310

Labeling unit ~320

Circumscribed rectangle extraction unit ~330

Area extraction unit ~340

Center-of-gravity extraction unit ~350

Day/Night determination unit ~312

# FIG. 3

Light information unit ~400

410 ~ Light determination unit ← Radar unit ~411

420 ~ Light intensity estimation unit

430 ~ Light three-dimensional position setting unit

440 ~ Light distribution pattern setting unit

# FIG. 4

500

Road surface reflection estimation unit

Weather determination unit ~511

510 ~ Road surface reflection coefficient determination unit

Road surface condition determination unit ~512

520 ~ Diffuse reflection position estimation unit

Car navigation system ~513

530 ~ Mirror reflection position estimation unit

Wiper ~514

540 ~ Road surface reflection image region estimation unit ← Clock unit ~541

# FIG. 5

```
┌─────────────────────────────────────────────┐
│ Onboard environment                          │ ～600
│ recognition unit                             │
│         ┌─────────────────────────┐          │
│         │   Lane recognition unit │ ～610     │
│         └─────────────────────────┘          │
│                    ↓                         │
│         ┌─────────────────────────┐          │
│         │   Road shoulder         │ ～620     │
│         │   recognition unit      │          │
│         └─────────────────────────┘          │
│                    ↓                         │
│         ┌─────────────────────────┐          │
│         │   Carriageway           │ ～630     │
│         │   recognition unit      │          │
│         └─────────────────────────┘          │
│                    ↓                         │
│         ┌─────────────────────────┐          │
│         │   Road surface sign     │ ～640     │
│         │   recognition unit      │          │
│         └─────────────────────────┘          │
│                    ↓                         │
│         ┌─────────────────────────┐          │
│         │   Road surface condition│ ～650     │
│         │   recognition unit      │          │
│         └─────────────────────────┘          │
│                    ↓                         │
│         ┌─────────────────────────┐          │
│         │   Vehicle detection unit│ ～660     │
│         └─────────────────────────┘          │
└─────────────────────────────────────────────┘
```

# FIG. 6

```
┌─────────────────────────────────────────────┐
│ Lane recognition                             │ ～610
│ unit                                         │
│         ┌──────────────────────────────┐     │
│         │ Processing region setting unit│ ～611│
│         └──────────────────────────────┘     │
│                    ↓                         │
│         ┌──────────────────────────────┐     │
│         │ Reflection region mask unit  │ ～612 │
│         └──────────────────────────────┘     │
│                    ↓                         │
│         ┌──────────────────────────────┐     │
│         │ White line feature extraction│ ～613 │
│         │ unit                         │     │
│         └──────────────────────────────┘     │
│                    ↓                         │
│         ┌──────────────────────────────┐     │
│         │ Image lane extraction unit   │ ～614 │
│         └──────────────────────────────┘     │
│                    ↓                         │
│         ┌──────────────────────────────┐     │
│         │ Vehicle coordinate lane      │ ～615 │
│         │ estimation unit              │     │
│         └──────────────────────────────┘     │
└─────────────────────────────────────────────┘
```

# FIG. 7

**Carriageway recognition unit** ~630

| Processing unit setting unit ~631 |
| Reflection region mask unit ~632 |
| Inter-image geographical correction unit ~633 |
| Flat surface region extraction unit ~634 |
| Mask region interpolation unit ~635 |
| Carriageway determination unit ~636 |

# FIG. 8

**Road surface sign recognition unit** ~640

| Processing region setting unit ~641 |
| Reflection region mask unit ~642 |
| Feature extraction unit ~643 |
| Pattern matching unit ~644 |

# FIG. 9

## (a)

Method of estimating three-dimensional position of light

## (b)

# FIG. 10

Light distribution pattern in terms of illuminance

(a)

(b)

# FIG. 11

Diffuse reflection and mirror reflection

(a)

Incident light

Diffuse reflection light

Diffuse reflection

(b)

Incident light

Mirror reflection light

Perfect mirror reflection

(c)

Incident light

Mirror reflection light

Mirror reflection on actual road surface

# FIG. 12

(a)

(b)

(c) Case of fish-eye rear camera

# FIG. 13

(a)

(b)

(c) Case of fish-eye rear camera

Bumper of vehicle

# FIG. 14

Onboard environment recognition system ～100

200～ Image acquisition unit

300～ Light source extraction unit

Day/Night determination unit ～312

400～ Light information unit

Evening sun-caused road surface reflection information unit ～4000

500～ Road surface reflection estimation unit

Evening sun-caused road surface reflection estimation unit ～5000

Onboard environment recognition unit ～600

## FIG. 15

Evening sun-caused road surface reflection information unit

4100 — Road surface reflection determination unit

4200 — Reflection intensity estimation unit

4300 — Reflection three-dimensional position setting unit

4400 — Sun direction setting unit

~4000

Vehicle behavior ~4410

Car navigation system ~513

## FIG. 16

5000

Evening sun-caused road surface reflection estimation unit

5100 — Road surface reflection coefficient determination unit

5200 — Diffuse reflection position estimation unit

5300 — Mirror reflection position estimation unit

5400 — Road surface reflection image region estimation unit

Weather determination unit ~511

Road surface condition determination unit ~512

Car navigation system ~513

Wiper ~514

Clock unit ~541

# FIG. 17

(a)

Vt

171

Sun

(b)

Case of fish-eye rear
camera

171    172

Whiteout region

Region that is not whiteout but
can be primary cause of erroneous
detection

WL

Bumper of vehicle

Vt

# FIG. 18

Vehicle detection unit

Processing region
setting unit ~661

Reflection region
setting unit ~662

Region-based
threshold setting unit ~663

Feature extraction unit ~664

Shape analysis unit ~665

Motion analysis unit ~666

~660

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11203446 A

- JP 2009065360 A